# EUROPÄISCHE PATENTSCHRIFT

(11) **EP 2 532 075 B1**
(45) Veröffentlichungstag und Bekanntmachung des Hinweises auf die Patenterteilung: **20.02.2019**
(21) Anmeldenummer: 10788315.9
(22) Anmeldetag: 06.12.2010
(51) Int. Cl.: H02K 1/17, H02K 23/04

(54) **AUßENKÖRPER EINES ELEKTROMECHANISCHEN ENERGIEWANDLERS**
OUTER BODY OF AN ELECTROMECANICAL ENERGY CONVERTER
CORPS EXTERIEUR D'UN CONVERTISSEUR D'ÉNERGIE ÉLECTROMÉCANIQUE

(30) Priorität: 02.02.2010 DE 102010001500
(43) Veröffentlichungstag der Anmeldung: 12.12.2012
(73) Patentinhaber: Robert Bosch GmbH, 70442 Stuttgart (DE)
(72) Erfinder: ISEL, Alain-Bernard, F-67160 Riedseltz (FR); KLUMPP, Daniel, 76532 Baden-Baden (DE); SUAREZ-SEMINARIO, Dariusz, 77855 Achern (DE)
(86) Internationale Anmeldenummer: PCT/EP2010/068949
(87) Internationale Veröffentlichungsnummer: WO 2011/095243

(56) Entgegenhaltungen:
- DE-A1-102007 014 348
- JP-A- 61 196 747
- JP-A- 2003 274 578
- US-A1- 2005 184 610

## Beschreibung

### Stand der Technik

Ein elektromagnetischer Energiewandler, der in Form eines Elektromotors einen elektrischen Strom in eine Drehbewegung oder in Form eines Generators eine Drehbewegung in einen elektrischen Strom umwandelt, umfasst üblicherweise zwei Körper, die bezüglich einer Drehachse beweglich zueinander angeordnet sind. Der bezüglich eines Betrachters stillstehende Körper wird Stator, der bewegliche Körper Rotor genannt. Häufig umfasst der Stator einen sogenannten Poltopf, in dem eine Anzahl von Permanentmagneten auf einer radialen Innenfläche verteilt ist. Ein zum Stator korrespondierender Rotor umfasst eine Anzahl Elektromagnete, die mit den Permanentmagneten elektromagnetisch zusammenwirken. Die Permanentmagnete werden im Poltopf üblicherweise angeklebt und alternativ oder zusätzlich mit elastischen Elementen verspannt. Die elastischen Elemente sind beispielsweise Federklammern, die benachbarte Permanentmagneten in Umfangsrichtung auseinander treiben und am Poltopf arretieren.

Kommt ein Verkleben, beispielsweise aus Fertigungs- oder belastungstechnischen Gründen nicht in Frage, kann eine Befestigung der Permanentmagneten mittels Federklammern problematisch sein, wenn die Abmessungen der Permanentmagnete und ihrer Abstände unterhalb gewisser praktisch handhabbarer Schwellen liegen.

DE 10 2007 014348 A1 zeigt einen Elektromotor mit einem Haltering mit polygonalem Querschnitt für quaderförmige Permanentmagnete.

JP 61 196747 A zeigt einen Elektromotor mit schalenförmigen Permanentmagneten, die mittels eines Stützrings in einem Gehäuse gehalten sind.

JP 203 274578 A zeigt einen weiteren Elektromotor mit schalenförmigen Permanentmagneten in einem Stützring.

US 2005/184610 A1 zeigt ebenfalls einen Elektromotor mit schalenförmigen Permanentmagneten in einem Stützring.

### Offenbarung der Erfindung

Es ist eine Aufgabe der Erfindung, einen Stator für einen elektromagnetischen Energiewandler anzugeben, der eine verbesserte Befestigung der Permanentmagneten realisiert. Es ist eine weitere Aufgabe, ein Verfahren zur Montage des Stators anzugeben.
Die Erfindung löst diese Aufgaben mittels einer Vorrichtung mit den Merkmalen des Anspruchs 1. Unteransprüche geben bevorzugte Ausführungsformen wieder.
In einem elektromechanischen Energiewandler mit einem Außenkörper und einem Innenkörper, die um eine Drehachse beweglich zueinander gelagert sind, umfasst ein erfindungsgemäßer Außenkörper ein ringförmiges Strukturelement, einen Permanentmagneten und einen Stützring, der konzentrisch im Strukturelement aufgenommen ist, wobei der Stützring eine Aussparung zur Aufnahme des Permanentmagneten umfasst und die Aussparung eine Begrenzungsfläche aufweist, die sich parallel zu einem Radius der Drehachse erstreckt.
Durch die Begrenzungsfläche können vorteilhafterweise Kräfte zwischen dem Permanentmagneten und dem Stützring, die beispielsweise beim Betrieb des elektromechanischen Energiewandlers auftreten können, übertragen werden, so dass eine Befestigung des Permanentmagneten mittels eines Adhäsivmittels und/oder mittels eines diskreten Federelements nicht erforderlich ist. Dadurch können eine Fertigung des Außenkörpers vereinfacht und/und eine Betriebssicherheit des elektromechanischen Energiewandlers erhöht werden.
Dabei weist der Stützring im Bereich der Aussparung ein Haltelement zur Lagerung des Permanentmagneten in radialer Richtung nach innen auf. Ein Hineinfallen des Permanentmagneten in das Strukturelement während einer Montage und/oder eines Betriebs des elektromagnetischen Energiewandlers kann durch das Halteelement vorteilhaft verhindert sein.
Der Permanentmagnet ist quaderförmig, wobei sich die größten Seitenflächen senkrecht zu einem Radius der Drehachse erstrecken. Außerdem ist der Stützring derart ausgebildet, dass der Stützring im Bereich des Permanentmagneten nicht weiter radial nach innen ragt als eine Begrenzungsfläche des Permanentmagneten.

In einer Ausführungsform erstreckt sich die den Permanentmagnet begrenzende Fläche in einer Ebene, die parallel zur Drehachse verläuft, diese aber nicht enthält. Dabei ist der Permanentmagnet ungebogen, das heißt, er umfasst im Wesentlichen nur ebene Flächen, indem er quaderförmig ausgebildet ist. Dabei liegt die Fläche des Permanentmagneten an der Begrenzungsfläche des Stützrings an und die Begrenzungsfläche des Stützrings erstreckt sich in einer Ebene parallel zur Drehachse.
Vorzugsweise weist das Strukturelement eine radiale Innenfläche zur Lagerung des Permanentmagneten in radialer Richtung nach außen auf, wobei sich die Innenfläche des Strukturelements senkrecht zu einem Radius der Drehachse erstreckt. Durch die solchermaßen wenigstens abschnittsweise polygonale Gestaltung der radialen Innenfläche des Strukturelements kann eine formschlüssige Lagerung des Permanentmagneten und eine Verdrehsicherung des Stützrings gegeben sein. Ferner gelingt auf die angegebene Weise eine großflächige Kraftübertragung zwischen dem Permanentmagneten bzw. dem Stützring und dem Strukturelement, so dass lokal hoch belastete Lagerflächen, die zu Beschädigungen des Permanentmagneten, des Stützrings und/oder des Strukturelements führen können, vermieden werden können. Das Strukturelement kann als magnetisches Schlusselement für den Permanentmagneten ausgebildet sein, wobei der beschriebene flächige Kontakt zum Permanentmagneten vorteilhaft die Übertragung eines magnetischen Feldes begünstigt.

Der Permanentmagnet weist eine ebene radiale Außenfläche zum Eingriff mit der ebenen radialen Innenfläche des Strukturelements auf. Dabei hat der Permanentmagnet gleichmässige Dicke und ist quaderförmig. Die Quaderform stellt eine Standard-Bauform für Permanentmagnete dar, so dass kostengünstige Standard-Permanentmagnete verbaut werden können.
Der Permanentmagnet kann ein Lanthanoid (eine "Seltene Erde") umfassen. Aus Lanthanoiden, insbesondere einer Verbindung mit Neodym und/oder Samarium, lassen sich besonders leistungsfähige Permanentmagnete herstellen. Derartige Hochleistungsmagnete können sehr kompakt dimensioniert und insbesondere in radialer Richtung relativ dünn sein. Die erfindungsgemäße Befestigung des Permanentmagneten bezüglich des Strukturelements kann bei dünnen Permanentmagneten besonders vorteilhaft eingesetzt werden, da eine Befestigung des Permanentmagneten mit Federelementen, Klammern oder Nieten aufgrund der geringen Angriffsflächen schwierig ist.

Der Stützring und das Strukturelement weisen ineinander eingreifende radiale Elemente gegen relatives Verdrehen um die Drehachse auf. Derartige radiale Elemente umfassen eine sich in radialer Richtung erstreckende Nase und eine zur Nase korrespondierende Nut. Dadurch kann eine zusätzliche Sicherung gegen Verdrehen des Stützrings im Strukturelement erzielt werden. Außerdem kann durch die ineinander eingreifenden radialen Elemente ein axiales Einführen des Stützrings in das Strukturelement erleichtert sein.
Der Außenkörper kann ein axiales Abschlusselement zum Verschließen des Strukturelements umfassen. Das Strukturelement ist topfförmig mit einem Boden ausgebildet und der Stützring ist axial an dem Boden des Strukturelements und an einer Innenfläche des Abschlusselements gelagert. Der solchermaßen gebildete Außenkörper, dessen Permanentmagnet in beiden axialen, beiden radialen und beiden Umfangsrichtungen arretiert ist, kann leicht und schnell montierbar sein.
Ein Verfahren zur Montage eines Außenkörpers umfasst Schritte des Bereitstellens eines ringförmigen Strukturelements, eines Permanentmagneten und eines Stützrings, der ausgebildet ist, konzentrisch um eine Drehachse im Strukturelement aufgenommen zu werden, wobei der Stützring eine Aussparung zur Aufnahme des Permanentmagneten umfasst und die Aussparung eine Begrenzungsfläche aufweist, die sich parallel zu einem Radius der Drehachse erstreckt.

Das Verfahren umfasst nur wenige einfache Schritte, mit denen die Elemente des Außenkörpers einfach und effizient zusammengefügt werden können. Eine Serienfertigung einer Vielzahl erfindungsgemäßer Außenkörper kann leicht manuell, maschinell oder in einer Kombination daraus durchgeführt werden.
Beim Einsetzen des Permanentmagneten kann der Stützring im Wesentlichen senkrecht zur Schwerkraft ausgerichtet sein, so dass der Permanentmagnet senkrecht zur Schwerkraft eingesetzt wird. Ein Einsatz von Hilfsvorrichtungen zur temporären Fixierung des Permanentmagneten im Stützring während der Montage kann dadurch erleichtert bzw. vermieden werden.
Das Verfahren kann ferner den Schritt des axialen Verschließens des Strukturelements in einem Abschlusselement umfassen, wobei das Strukturelement topfförmig mit einem Boden ausgebildet ist und der Stützring axial zwischen dem Boden des Strukturelements und einer Innenfläche des Abschlusselements gelagert ist. Diesem Schritt kann ein Einführen eines Innenkörpers des Energiewandlers vorausgehen, so dass durch den beschriebenen Schritt sowohl eine Montage des Außenkörpers als auch eine Montage des Energiewandlers abgeschlossen werden kann.

### Kurze Beschreibung der Zeichnungen

Im Folgenden wird die Erfindung mit Bezug auf die beigefügten Zeichnungen genauer beschrieben, in denen:
Figur 1 einen Stator eines Elektromotors;
Figur 2 ein Detail des Stators aus Figur 1;
Figur 3 ein weiteres Detail des Stators aus den Figuren 1 und 2; und
Figur 4 ein Verfahren zur Montage des Stators aus den Figuren 1 bis 3 darstellt.

### Genaue Beschreibung eines Ausführungsbeispiels

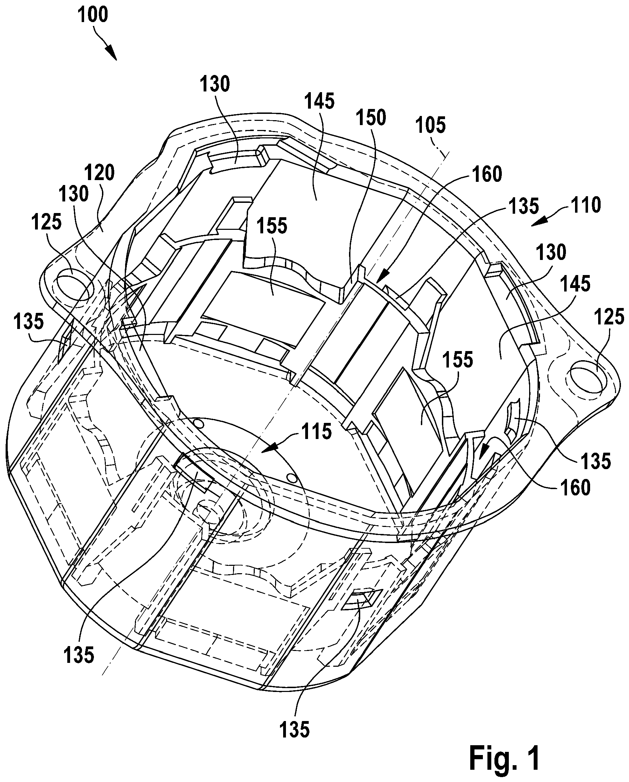

Figur 1 zeigt einen Stator 100 eines Elektromotors in einer perspektivischen und teilweise transparenten Darstellung. Der Elektromotor als ein mögliches Ausführungsbeispiel eines elektromechanischen Energiewandlers umfasst einen Außenkörper in Gestalt des Stators 100 und einen nicht dargestellten Innenkörper, der in der Darstellung von Figur 1 ein Rotor ist.

Entlang einer Drehachse 105 erstreckt sich ein Poltopf 110 mit einem Boden 115 und einem Flansch 120. Der Flansch 120 erstreckt sich an einem oberen Ende des Poltopfes 110 in radialer Richtung nach außen und weist zwei Ausformungen mit je einem Befestigungsloch 125 zur Befestigung des Elektromotors auf. Im Bereich einer inneren Begrenzung des Flansches 120 sind drei Vertiefungen 130 in axialer und in radialer Richtung in den Poltopf 110 eingebracht. Nasen 135 erstrecken sich von einer Wand des Poltopfes 110 in radialer Richtung nach innen. Die Nasen 135 sind in unterschiedlichen Abständen zum Boden 115 angebracht.

Der Poltopf 110 umfasst eine Anzahl planer Innenflächen 145, die eine ansonsten kreisförmig gebogene Wand des Poltopfes 110 in regelmäßigen Abständen unterbrechen. Die Nasen 135 sind jeweils an gebogenen Abschnitten des Poltopfes 110 angebracht, die zwischen den Innenflächen 145 liegen. Im Poltopf 110 ist ein Stützring 150 aufgenommen, dessen radiale Außenseite abschnittsweise formschlüssig mit der radialen Innenseite des Poltopfes 110 im Eingriff steht. Der Stützring 150 liegt am Boden 115 des Poltopfes 110 an. Der Stützring 150 umfasst eine Reihe von Aussparungen, in denen jeweils ein quaderförmiger Permanentmagnet 155 derart aufgenommen ist, dass der Permanentmagnet 155 flächig an einer der Innenflächen 145 des Poltopfes 110 anliegt. Der Stützring 150 umfasst ferner parallel zur Drehachse 105 verlaufende Nuten 160, die derart mit den Nasen 135 korrespondierend ausgeformt sind, dass der Stützring 150 von oben entlang der Drehachse 105 in den Poltopf 110 eingeführt werden kann, bis es am Boden 115 anliegt. Ein Verdrehen des Stützrings 150 um die Drehachse 105 wird dabei durch einen in Umfangsrichtung wirkenden Eingriff zwischen den Nasen 135 und den Nuten 160 verhindert.

Der Stützring 150 ist aus einem nicht magnetischen Material, beispielsweise aus einem Kunststoff, gefertigt. In Umfangsrichtung auf den Stützring 150 wirkende Kräfte der Permanentmagnete 155 werden durch den Formschluss des Stützrings 150 mit dem Poltopf 110 an diesen weitergeleitet. Die Nasen 135 und die dazu korrespondierenden Nuten 160 können ebenfalls in Umfangsrichtung wirkende Kräfte zwischen dem Stützring 150 und dem Poltopf 110 übertragen. Flanken der Nasen 135 können einseitig oder beidseitig an den korrespondierenden Nuten 160 anliegen, so dass sie bei einer Verdrehung des Poltopfs 110 gegenüber dem Stützring 150 um die Drehachse 105 entstehende Kräfte in einer oder in beiden Drehrichtungen übertragen.

Der Poltopf 110 kann aus einem magnetisch weichen Material bestehen, so dass er außer zur Aufnahme der anderen Elemente auch zur Leitung von Magnetfeldern zwischen den Permanentmagneten 155 verwendet werden kann. Ein innerer Durchmesser des Poltopfes 110 beträgt in der dargestellten Ausführungsform ca. 40-65 mm. Die Permanentmagnete 155 sind vorzugsweise Hochleistungsmagneten aus einer Neodym-Eisen-Bor- oder einer Samarium-Kobalt-Verbindung. Eine Dicke der quaderförmigen Permanentmagnete 155 in radialer Richtung beträgt ca. 1,5-2,5 mm. Der in Figur 1 dargestellte Stator 100 ist Teil eines Elektromotors mit einer Leistung von bis zu 200 W, bevorzugt etwa 50-180 W, und ist zur Verwendung in einem ABS-Hydroaggregat zur Verwendung in einem Kraftfahrzeug vorgesehen.

Der Stator 100 kann durch Einsetzen eines nicht dargestellten Rotors entlang der Drehachse 105 und Aufsetzen eines ebenfalls nicht dargestellten hinteren Deckels zu einem Elektromotor bzw. Generator vervollständigt werden. Der Deckel kann in eine oder mehrere der Vertiefungen 130 eingreifen und so gegen Verdrehen gesichert sein.

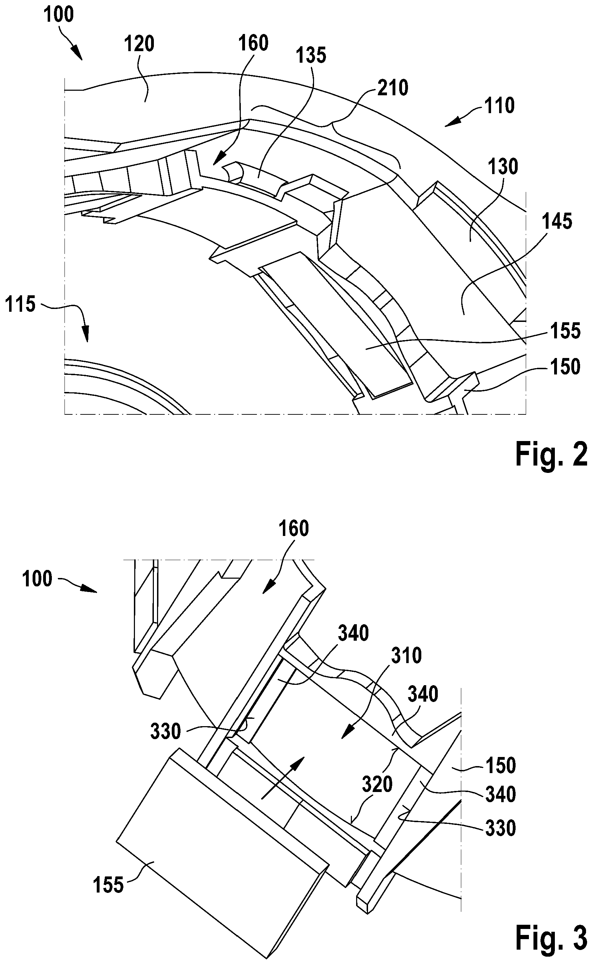

Figur 2 zeigt eine Detailansicht des Stators 100 aus Figur 1 aus einer anderen Perspektive. Es ist gut erkennbar, wie der Permanentmagnet 155, dessen größte ebene Außenfläche radial nach außen weist, an der ebenen Innenfläche 145 des Poltopfes 110 flächig anliegt. Der Stützring 150 liegt im Bereich der Innenfläche 145 ebenfalls flächig am Poltopf 110 an. An einem zur Innenfläche 145 benachbarten gebogenen Abschnitt 210 des Poltopfes 110 liegt der Stützring 150 nicht flächig an, sondern bildet eine Nut 160 zur Aufnahme der Nase 135 des Poltopfes 110. Der Stützring 150 kann dadurch in axialer Richtung in den Poltopf 160 eingefügt werden und leitet danach in Umfangsrichtung wirkende Kräfte in den Poltopf 110 ein. In der dargestellten Ausführungsform liegt nur eine Flanke der Nut 160 in Umfangsrichtung an der Nase 135 an. Sind Kräfte in Umfangsrichtung zwischen dem Stützring 150 und dem Poltopf 110 nur in einer Richtung zu erwarten, beispielsweise weil die Drehrichtung des Elektromotors invariabel ist, so können diese Kräfte durch den einseitigen Eingriff zwischen der Nase 135 und der Nut 160 übertragen werden. Gleichzeitig ist die Nut 160 so breit ausgeführt, dass auf der Seite der Nase 135, die nicht mit der Nut 160 in Eingriff steht, ein gewisser Spielraum verbleibt, so dass ein leichtgängiges axiales Verschieben des Stützrings 150 während einer Montage im Poltopf 110 ermöglicht ist, ohne eine hochgenaue Passung zwischen der Nase 135 und der Nut 160 zu erfordern.

Figur 3 zeigt ein weiteres Detail des Stators 100 aus den Figuren 1 und 2 aus noch einer anderen Perspektive. Der Stützring 150 und der Permanentmagnet 155 sind in einer Explosionsdarstellung von außen mit Blickrichtung zur Drehachse 105 dargestellt.

Der Stützring 150 weist eine Aussparung 310 zur Aufnahme des Permanentmagneten 155 auf. Die Aussparung 310 ist durch zwei einander gegenüberliegende axiale Begrenzungen 320 und durch zwei einander gegenüberliegende, in Umfangsrichtung verlaufende Begrenzungen 330 des Stützrings 150 definiert. Die Begrenzungen 330 erstrecken sich in einer Ebene, die parallel zur Drehachse 105 (nicht dargestellt) verläuft, die Drehachse 105 jedoch nicht umfasst. Diese Ausführungsform korrespondiert zu der dargestellten Quaderform des Permanentmagneten 155. Zwei Haltelemente 340 bilden axiale Auflageflächen für den Permanentmagneten 155.

Ist der Permanentmagnet 155 in die Aussparungen 310 eingesetzt, so liegt ein Teil der dem Betrachter abgewandten Seite des Permanentmagneten 155, die in den Figuren 1 und 2 an der Innenfläche 145 des Poltopfes 110 anliegt, in radialer Richtung nach innen auf den Haltelementen 340, so dass der Permanentmagnet 155 in radialer Richtung zwischen dem Stützring 150 und dem Poltopf 110 fixiert ist. Eine Fixierung des Magneten 155 gegenüber dem Stützring 150 in Umfangsrichtung und in axialer Richtung erfolgt durch Formschluss der Außenkanten des Permanentmagneten 155 mit den Begrenzungen 330 bzw. 320 der Aussparung 310. Dadurch ist der Permanentmagnet 155 vollständig gegenüber dem Poltopf 110 fixiert, wenn der Stützring 150, wie in Figur 1 dargestellt, axial in den Poltopf 110 eingeschoben und in axialer Richtung gegen Verschieben nach oben gesichert ist. Diese Sicherung erfolgt, wie oben mit Bezug auf Figur 1 näher erläutert, üblicherweise durch einen den Poltopf axial abschließenden Deckel.

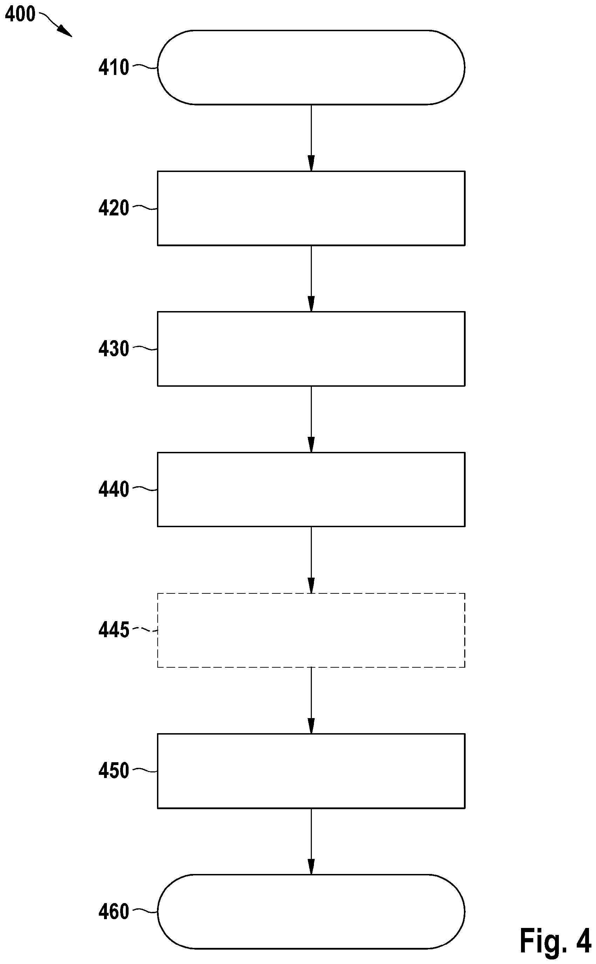

Figur 4 zeigt ein Verfahren 400 zur Herstellung des Stators 100 aus den Figuren 1 bis 3. In einem ersten Schritt 410 befindet sich das Verfahren 400 im Startzustand. In einem folgenden Schritt 420 werden der Poltopf 110, die Permanentmagnete 155 und der Stützring 150 bereitgestellt. Dann werden in einem Schritt 430 die Permanentmagnete 155 in radialer Richtung von außen in die Aussparungen 310 des Stützrings 155 eingesetzt. Dazu kann der Stützring 150 im We sentlichen senkrecht zur Schwerkraft ausgerichtet sein, d. h. die Drehachse 105 verläuft in Richtung der Schwerkraft und die Permanentmagneten werden in einer Bewegung senkrecht zur Schwerkraft eingesetzt. Der Stützring 150 kann dabei auf einem Montagedorn angeordnet sein, um ihn in dieser Lage zu fixieren und eine zusätzliche Festigkeit zu verleihen. Die Permanentmagnete 155 können mit leichtem Klemmsitz in die Aussparungen 310 eingesetzt werden, so dass während des weiteren Ablaufs des Verfahrens 400 keine zusätzliche Sicherung der Permanentmagnete 155 gegen Herausfallen aus dem Stützring 150 erforderlich ist.

Anschließend wird in einem Schritt 440 der Stützring 150 mit den Permanentmagneten 155 und eventuell dem Montagedorn axial in den Poltopf 110 eingeführt. Alternativ dazu kann auch der Poltopf 110 über den Stützring 150 mit dem Permanentmagneten 155 gestülpt werden. Danach kann der Montagedorn vom Stützring 150 entfernt werden.

In einem folgenden Schritt 445, der nicht notwendigerweise vom Verfahren 400 umfasst ist und auch einem anderen Verfahren zur Endmontage eines Elektromotors oder Generators zuzurechnen sein kann, wird ein Rotor in den Stator 100 axial eingesetzt.

In einem folgenden Schritt 450 wird durch axiales Aufsetzen eines Deckels der Stützring 150 axial im Poltopf 110 gesichert und gleichzeitig der Elektromotor fertig gestellt. Abschließend befindet sich das Verfahren 400 in einem Endzustand 460.

## Patentansprüche

1. Außenkörper (100) eines elektromechanischen Energiewandlers mit einem Außenkörper (100) und einem Innenkörper, die um eine Drehachse (105) beweglich zueinander gelagert sind, wobei der Außenkörper (100) Folgendes umfasst:
- ein ringförmiges Strukturelement (110);
- einen Permanentmagneten (155); und
- einen Stützring (150), der konzentrisch im Strukturelement (110) aufgenommen ist;
- wobei der Stützring (150) eine Aussparung (310) zur Aufnahme des Permanentmagneten (155) umfasst und die Aussparung (310) eine Begrenzungsfläche (330) aufweist, die sich parallel zu einem Radius der Drehachse (105) erstreckt;
- der Permanentmagnet (155) quaderförmig ist, wobei sich die größten Seitenflächen senkrecht zu einem Radius der Drehachse (105) erstrecken;
**dadurch gekennzeichnet, dass**
das Strukturelement (110) als Poltopf ausgebildet ist, der planare Innenflächen zur flächigen Anlage der Permanentmagnete (155) und dazwischen kreisförmig gebogene Wandabschnitte aufweist, und der Stützring (150) und das Strukturelement (110) ineinander eingreifende radiale Elemente (135, 160) zur Sicherung gegen relatives Verdrehen um die Drehachse (105) aufweisen, wobei als radiale Elemente (135, 160) jeweils an den gebogenen Wandabschnitten radial sich nach innen erstreckend Nasen (135) angebracht sind, die in parallel zur Drehachse verlaufende korrespondierende Nuten (160) im Stützring (150) entlang der Drehachse einführbar sind, und der Stützring (150) am Boden (115) des Poltopfes anliegt.

2. Außenkörper (100) nach Anspruch 1, **dadurch gekennzeichnet, dass** das Strukturelement (110) eine radiale Innenfläche (145) zur Lagerung des Permanentmagneten (155) in radialer Richtung nach außen aufweist, wobei sich die Innenfläche (145) des Strukturelements (110) senkrecht zu einem Radius der Drehachse (105) erstreckt.

3. Außenkörper (100) nach einem der vorangehenden Ansprüche, **dadurch gekennzeichnet, dass** der Permanentmagnet (155) ein Lanthanoid umfasst.

4. Außenkörper (100) nach einem der vorangehenden Ansprüche, **gekennzeichnet durch** ein Abschlusselement zum axialen Verschließen des Strukturelements (110), wobei der Stützring (150) axial an dem Boden (115) des Strukturelements (110) und einer Innenfläche des Abschlusselements gelagert ist.

## Claims

1. Outer body (100) of an electromechanical energy converter having an outer body (100) and having an inner body which are mounted so as to be movable relative to one another about an axis of rotation (105), wherein the outer body (100) comprises the following:
- an annular structural element (110);
- a permanent magnet (155); and
- a support ring (150) which is accommodated concentrically in the structural element (110);
- wherein the support ring (150) comprises a cutout (310) for receiving the permanent magnet (155) and the cutout (310) has a delimiting surface (330) which extends parallel to a radius of the axis of rotation (105);
- the permanent magnet (155) is cuboidal, wherein the largest side surfaces extend perpendicular to a radius of the axis of rotation (105);
**characterized in that**
the structural element (110) is designed as a pole pot which has planar inner surfaces for the areal abutment of the permanent magnet (155) and, therebetween, has circularly curved wall sections, and the support ring (150) and the structural element (110) have radial elements (135, 160), which engage into one another, for securing against relative rotation about the axis of rotation (105), wherein, as radial elements (135, 160), lugs (135) are attached in each case to the curved wall sections so as to extend radially inwards, which lugs can be introduced along the axis of rotation into corresponding grooves (160) in the support ring (150), which grooves run parallel to the axis of rotation, and the support ring (150) bears against the base (115) of the pole pot.

2. Outer body (100) according to Claim 1, **characterized in that** the structural element (110) has a radial inner surface (145) for mounting the permanent magnet (155) in the radially outward direction, wherein the inner surface (145) of the structural element (110) extends perpendicular to a radius of the axis of rotation (105).

3. Outer body (100) according to one of the preceding claims, **characterized in that** the permanent magnet (155) comprises a lanthanoid.

4. Outer body (100) according to one of the preceding claims, **characterized by** a closure element for axially closing off the structural element (110), wherein the support ring (150) is mounted axially on the base (115) of the structural element (110) and an inner surface of the closure element.

## Revendications

1. Corps extérieur (100) d'un convertisseur électromécanique d'énergie présentant un corps extérieur (100) et un corps intérieur montés à déplacement mutuel autour d'un axe de rotation (105), le corps extérieur (100) comprenant ce qui suit :
un élément structurel (110) de forme annulaire,
un aimant permanent (155) et
une bague de soutien (150) reprise concentriquement dans l'élément structurel (110),
la bague de soutien (150) comportant une découpe (310) qui loge l'aimant permanent (155) et la découpe (310) présentant une surface frontière (330) qui s'étend parallèlement à un rayon de l'axe de rotation (105),
l'aimant permanent (155) ayant la forme d'un parallélépipède dont les grandes surfaces latérales s'étendent perpendiculairement à un rayon du l'axe de rotation (105),
**caractérisé en ce que**
l'élément structurel (110) est configuré comme chapeau polaire qui présente des surfaces intérieures planes permettant la pose à plat des aimants permanents (155), avec entre elles des sections de paroi cintrées en forme de cercle,
**en ce que** la bague de soutien (150) et l'élément structurel (110) présentent des éléments radiaux (135, 160) s'engageant les uns dans les autres pour empêcher une rotation relative autour de l'axe de rotation (105),
**en ce que** des becs radiaux (135) s'étendant vers l'intérieur qui peuvent être insérés le long de l'axe de rotation dans des rainures (160) correspondantes qui s'étendent dans la bague de soutien (150) parallèlement à l'axe de rotation sont ménagés comme éléments radiaux (135, 160) sur les parties de paroi cintrées et
**en ce que** la bague de soutien (150) repose contre le fond (115) de la calotte polaire.

2. Corps extérieur (100) selon la revendication 1, **caractérisé en ce que** le l'élément structurel (110) présente une surface intérieure radiale (145) permettant le montage du l'aimant permanent (155) dans la direction radiale vers l'extérieur, la surface intérieure radiale (145) de l'élément structurel (110) s'étendant perpendiculairement par rapport à un rayon de l'axe de rotation (105).

3. Corps extérieur (100) selon l'une des revendications précédentes, **caractérisé en ce que** le l'aimant permanent (155) comprend un lanthanide.

4. Corps extérieur (100) selon l'une des revendications précédentes, **caractérisé par** un élément de fermeture qui ferme axialement l'élément structurel (110), la bague de soutien (150) étant montée axialement sur le fond (115) de l'élément structurel (110) et sur une surface intérieure de l'élément de fermeture.
